# EUROPÄISCHE PATENTSCHRIFT

(11) **EP 1 700 745 B1**
(45) Veröffentlichungstag und Bekanntmachung des Hinweises auf die Patenterteilung: **27.08.2008**
(21) Anmeldenummer: 06004093.8
(22) Anmeldetag: 01.03.2006
(51) Int. Cl.: B60R 9/06, B60R 9/10

(54) **Lastenträger, insbesondere Fahrradträger**
Load carrier, particularly a bicycle carrier
Porte-charge, en particulier porte-bicyclette

(30) Priorität: 10.03.2005 DE 202005004043 U
(43) Veröffentlichungstag der Anmeldung: 13.09.2006
(73) Patentinhaber: EUFAB GmbH, 42781 Haan (DE)
(72) Erfinder: Becker, Alexander, 42329 Wuppertal (DE)
(74) Vertreter: Paul, Dieter-Alfred

(56) Entgegenhaltungen:
- US-A- 3 843 001
- US-A- 4 856 686
- US-A- 5 082 037
- US-A- 6 036 070
- US-A- 6 145 720
- US-B1- 6 390 343

## Beschreibung

Die Erfindung betrifft einen Lastenträger, insbesondere einen Fahrradträger, für Kraftfahrzeuge mit folgenden Merkmalen:
a) der Lastenträger hat eine Kupplung für die Verbindung mit dem Heck eines Kraftfahrzeuges;
b) der Lastenträger hat ein davon ausgehendes Tragelement;
c) das Tragelement trägt eine Trageinrichtung;
d) die Trageinrichtung weist wenigstens eine Lastenaufnahme für die Anbringung einer Last auf;
e) Tragelement und Trageinrichtung sind über ein Schiebe-Kipp-Element miteinander gekoppelt;
f) das Schiebe-Kipp-Element ist derart ausgebildet, daß die Trageinrichtung einerseits aus einer ersten, kupplungsnahen Endstellung mittels einer einen Schiebeweg bereitstellenden Schiebeführung in eine zweite, kupplungsferne Endstellung verschieblich ist und andererseits um eine horizontalen Querachse aus einer Normalstellung in eine Abklappstellung nach unten kippbar ist;
g) es ist eine Verriegelungseinrichtung zur Blockierung der Trageinrichtung in der ersten Stellung vorhanden;
h) die Schiebeführung ist so ausgebildet, daß die Trageinrichtung nach Entriegeln der Verriegelungseinrichtung sofort frei beweglich und zwischen den beiden Endstellungen zwangsgeführt ist.

Solche Lastenträger sind beispielsweise der DE 43 15 292 A1 und DE 44 03 715 A1 sowie der DE 202 14 388 U1 zu entnehmen. Diese Lastenträger haben eine Kupplung für die Anbringung am Heck eines Kraftfahrzeuges, und zwar entweder direkt an dessen Karosserie oder einer an der Karosserie angebrachten Anhängerkupplung. Von der Kupplung geht ein Tragelement aus, an dem eine Trageinrichtung über ein Schwenkgelenk mit horizontaler Querachse angelenkt ist. Auf der Trageinrichtung können Lasten befestigt werden, vornehmlich Fahrräder.

In der Transportstellung erstreckt sich die Trageinrichtung im wesentlichen horizontal. Eine Verriegelungseinrichtung blockiert die Trageinrichtung in dieser Position. Damit die Heckklappe des Kraftfahrzeuges auch dann geöffnet werden kann, wenn auf der Trageinrichtung Fahrräder befestigt sind, kann die Trageinrichtung um die Querachse soweit abgeklappt werden, daß die Heckklappe normalerweise nicht mit den auf der Trageinrichtung stehenden Rädern kollidiert. Hierzu wird die Verriegelungseinrichtung in eine Entriegelungsstellung gebracht. Dadurch kommt die Trageinrichtung frei und kann um einen bestimmten Winkel nach unten in die Abklappstellung verschwenken. Ein Abklappendanschlag begrenzt den Abklappwinkel.

In der EP 1 059 205 A1 ist ein weiterer Lastenträger offenbart, bei dem die Trageinrichtung nach Entriegeln der Verriegelungseinrichtung aus einer Transportstellung in eine Abklappstellung verschwenkbar ist. Die Kupplung von Trageinrichtung und Tragelement erfolgt über ein Schiebe-Kipp-Element, das derart ausgebildet ist, daß die Trageinrichtung aus einer ersten, kupplungsnahen Endstellung nach hinten in eine zweite, kupplungsferne Endstellung verschoben werden muß, damit die Trageinrichtung um die horizontale Querachse in eine Abklappstellung nach unten geklappt werden kann. Das Schiebe-Kipp-Element ist dabei so gestaltet, daß sich das kupplungsnahe Ende der Trageinrichtung und das Tragelement in der ersten Endstellung überlappen, und zwar so, daß das Ende der Trageinrichtung innenseitig an dem Tragelement unter Verspannung anliegt. Nach Entriegeln der Verriegelungseinrichtung ist die Trageinrichtung wegen dieser Anlage nicht frei bewegbar. Um sie in die zweite Endstellung zu befördern, muß die Anlage am Tragelement durch Anheben aufgehoben werden. Erst dann kommt sie frei und kann um ein kurzes Stück nach hinten gezogen und dann in die Abklappstellung verschwenkt werden.

Bei Kraftfahrzeugen mit großer, im wesentlichen senkrecht stehender Heckklappe, beispielsweise bei Kleinbussen, reicht das Abklappen der Trageinrichtung nicht aus, um die Heckklappe ohne Entfernung der Fahrräder aufklappen zu können. Dies gilt auch für den Lastenträger gemäß der EP 1 059 205 A1, da die Trageinrichtung für den Abklappvorgang nur geringfügig nach hinten gezogen werden kann, so daß sich der Abstand zu der Heckklappe nur unwesentlich vergrößert. Ein wesentlicher Nachteil ist dabei, daß die Trageinrichtung mit der Last von Hand angehoben werden meß, um von dem Tragelement frei zu kommen. Dann muß noch ein Anstieg in der Schiebeführung überwunden werden. Hierzu ist eine erhebliche Kraft vonnöten, die nicht immer zur Verfügung steht. Der Lastenträger nach der EP 1 059 205 A1 hat deshalb einen erheblichen Nachteil gegenüber den vorbekannten Lastenträgern mit Abklappmöglichkeit.

Darüber hinaus sind Lastenträger der gattungsgemäßen Art bekannt (vgl. US 6,145,720 A), bei denen die Trageinrichtung in Form eines geschlossenen Gehäuses um eine horizontale und sich quer zur vorgesehenen Fahrtrichtung erstreckenden Achse verschwenkbar an einem Schiebe-Kipp-Element gelagert ist. Zur Verbesserung der Zugänglichkeit zur Heckklappe eines mit dem Lastenträger versehenen Fahrzeuges kann die Trageinrichtung aus einer vertikalen in eine horizontale Stellung nach hinten verchwenkt werden, sobald eine Verriegelungseinrichtung gelöst ist. Das Schiebe-Kipp-Element ist mit einer Schiebeführung versehen, die einen Schiebeweg bereitstellt. Über die Schiebeführung kann das Schiebe-Kipp-Element in einer kupplungsnahen und einer kupplungsfernen Endstellung fixiert werden. Die Schiebeführung ist nicht dazu vorgesehen, einen Schiebeweg zwecks Verbesserung der Zugänglichkeit zum Heck des Kraftfahrzeuges zur Verfügung zu stellen. Vielmehr dient hierzu allein die Kippbarkeit der Trageinrichtung.

Daneben sind Lastenträger bekannt, die am Heck eines Kraftfahrzeugs befestigt werden, um ein Zweirad quer zur Fahrtrichtung transportieren zu können (vgl. US 3,843,001 A). Bei diesem Lastenträger ist ein Schiebe-Kipp-Element vorhanden, das es ermöglicht, die Trageinrichtung seitlich - d.h. quer zur Fahrtrichtung - zunächst zu verschieben und dann so weit zu kippen, daß die Trageinrichtung eine Art Rampe bildet, so daß das Zweirad seitlich auf die Trageinrichtung aufgerollt und fixiert werden kann.

Der Erfindung liegt die Aufgabe zugrunde, einen Lastenträger der eingangs genannten Art so auszubilden, daß bei Anbringung an Fahrzeugen auch mit großer Heckklappe ein Hochschwenken derselben ohne Entfernung der Last möglich ist.

Diese Aufgabe wird erfindungsgemäß dadurch gelöst, daß die Schiebeführung so ausgebildet ist, daß die Trageinrichtung in einem ersten kupplungsnahen Schiebebereich nicht kippbar ist. Grundgedanke der Erfindung ist es also, die Schiebeführung so auszubilden, daß die Trageinrichtung je nach Länge der Schiebeführung um einen beträchtlichen Betrag von der Kupplung und damit der Heckklappe weggeschoben werden kann, wobei die Schiebeführung für eine Zwangsführung sorgt, d.h. sie bedarf nicht - wie bei dem Lastenträger nach der EP 1 059 205 A1 - einer Unterstützung durch die Bedienungsperson. Durch die erfindungsgemäße Gestaltung der Schiebeführung besteht die Möglichkeit, die Heckklappe zunächst allein durch die nur wenige Kraft erfordernde Verschiebung der Trageinrichtung frei zu bekommen. Erst wenn die Verschiebung nicht ausreicht, soll die Möglichkeit entstehen, die Zugänglichkeit durch Abklappen der Trageinrichtung noch weiter zu verbessern.

Die Länge des Schiebeweges kann den jeweiligen Anforderungen so angepaßt werden, daß zusammen mit dem Abklappen die Heckklappe desjenigen Fahrzeugs frei kommt, für die der Lastenträger bestimmt ist. Vorzugsweise sollte der Schiebeweg mindestens 10 cm betragen. Er kann selbstverständlich auch größer sein, wenn dies für das jeweilige Fahrzeug erforderlich ist. Je größer der Schiebeweg ist, desto geringer kann der Abklappwinkel gehalten werden. Je geringer dieser Winkel ist, um so weniger Mühe bereit es, den Lastenträger aus der Abklappstellung wieder in die Normalstellung zu verschwenken.

Die Schiebeführung sollte so ausgebildet sein, daß die Trageinrichtung ausschließlich linear verschieblich ist, und zwar vorzugsweise horizontal, die bestimmungsgemäße Montage vorausgesetzt, allenfalls zur Kupplung hin leicht abfallend geneigt. Vorzugsweise sollte die Trageinrichtung erst in der zweiten Endstellung in die Abklappstellung kippbar sein.

Besonders geeignet ist eine Schiebeführung, die als Teleskopführung mit einem Innenteleskop und einem darauf verschieblich gelagerten Außenteleskop ausgebildet ist. Dabei sollte zweckmäßigerweise das Innenteleskop zum Tragelement gehören und die Trageinrichtung an dem Außenteleskop befestigt sein. Die Innen- und Außenteleskope sind zweckmäßigerweise als im Querschnitt rechteckige Rohre ausgebildet. Dabei kann zwischen Außen- und Innenteleskop eine Zusatzführung vorgesehen sein, die ausschließlich in einem ersten, kupplungsnahen Schiebebereich in der Weise wirksam ist, daß sie die Trageinrichtung am Abklappen hindert.

Die Schiebeführung kann Gleitlager aufweisen, um die Verschieblichkeit zu gewährleisten. Zweckmäßiger ist es jedoch, für die Schiebeführung einen Rollensatz vorzusehen, über den die Trageinrichtung relativ zu dem Tragelement verschiebbar zwangsgeführt ist. Ein solcher Rollensatz gewährleistet geringe Reibung und ist gegen Umwelteinflüsse relativ unempfindlich. Der Rollensatz sollte an dem Innenteleskop gelagert sein. Konkret kann der Rollensatz zumindest eine erste kupplungsnahe und zumindest eine zweite, kupplungsferne Führungsrolle aufweisen. Vorzugsweise sollten zwei erste Rollen und zwei zweite Rollen jeweils auf einer Parallelen zur Querachse im Abstand zueinander vorgesehen sein.

Eine gute Führung ergibt sich, wenn die zumindest erste und zweite Führungsrolle höhenversetzt angeordnet sind. Zweckmäßigerweise sollten die Führungsrollen beidseitig von Führungsbahnen eingefaßt sein, weil auch dies einer möglichst guten Führung dienlich ist. In weiterer Ausgestaltung der Erfindung ist vorgesehen, daß die zumindest erste Führungsrolle einen solchen Abstand zur Kupplung hat, daß die Trageinrichtung nur in einem ersten, kupplungsnahen Schiebebereich von der zumindest einen ersten Führungsrolle geführt wird, dann jedoch um die zumindest eine zweite Führungsrolle abklappbar ist. Über die Anordnung der zumindest einen ersten Führungsrolle wird dann bestimmt, nach welchem Schiebeweg, beginnend von der ersten Endstellung, ein Abklappen der Trageinrichtung durch Verlassen der Führung durch die zumindest eine erste Führungsrolle ermöglicht wird.

Nach der Erfindung ist ferner vorgesehen, daß der Schiebeweg in den Endstellungen durch Endstellungsanschläge begrenzt ist. Entsprechendes sollte für die Abklappstellung vorgesehen sein, d.h. die Trageinrichtung sollte in dieser Stellung an einem Abklappanschlag anliegen, der an dem Tragelement vorgesehen ist.

In der Zeichnung ist die Erfindung anhand eines Ausführungsbeispiels näher veranschaulicht. Es zeigen:
- Figur 1: eine Draufsicht auf den erfindungsgemäßen Fahrradträger;
- Figur 2: eine Seitenansicht des Fahrradträgers gemäß Figur 1 mit Teilschnitten in der ersten Endstellung;
- Figur 3: das Innenteleskop der Schiebeführung des Fahrradträgers gemäß den Figuren 1 und 2 in der Seitenansicht;
- Figur 4: das Innenteleskop gemäß Figur 3 im Querschnitt;
- Figur 5: das Innenteleskop gemäß den Figuren 3 und 4 in der Draufsicht mit Teilschnitt;
- Figur 6: das Außenteleskop der Schiebeführung des Fahrradträgers gemäß den Figuren 1 und 2 in der Seitenansicht mit Teilschnitten;
- Figur 7: das Außenteleskop gemäß Figur 6 in stirnseitiger Ansicht;
- Figur 8: das Außenteleskop gemäß den Figuren 6 und 7 in der Draufsicht;
- Figur 9: den Fahrradträger gemäß den Figuren 1 und 2 in der Seitenansicht mit Teilschnitten in der kupplungsfernen Endstellung vor dem Abklappen und
- Figur 10: den Fahrradträger in der Ansicht gemäß Figur 9 nach dem Abklappen.

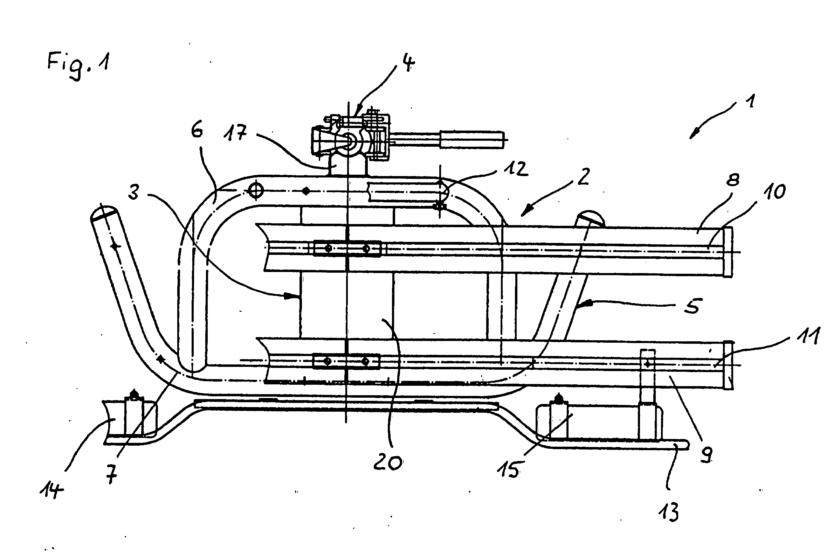

Der in Figur 1 dargestellte Fahrradträger 1 weist eine Trageinrichtung 2 auf, die auf einem Schiebe-Kipp-Element 3 befestigt ist. Das Schiebe-Kipp-Element 3 ist vorderseitig mit einer Kupplung 4 verbunden, über die der Fahrradträger 1 mit dem genormten Kugelkopf einer Anhängerkupplung verbindbar ist.

Die Trageinrichtung 2 weist einen Tragrahmen 5 auf, der aus einem ersten U-Rohrprofil 6, das nach hinten offen ist, und einem zweiten U-Rohrprofil 7, das nach vorne hin offen ist, zusammengesetzt ist. Beide sind miteinander verschweißt. Auf dem Tragrahmen 5 befestigt sind zwei Tragschienen 8, 9, die zur linken Seite hin nur verkürzt dargestellt sind und obenseitig V-förmige Nuten 10, 11 ausbilden. In die Nuten 10, 11 können die Räder von jeweils einem Fahrrad eingestellt werden, so daß die Fahrräder senkrecht stehen. Von der Basis des ersten U-Rohrprofils 6 steht ein Befestigungsbügel 12 senkrecht hoch - auch er ist in Figur 1 verkürzt dargestellt -, an dem die in die Nuten 10, 11 eingestellten Fahrräder über hier nicht dargestellte, verstellbare Klemmstangen befestigt werden können.

An der Rückseite des zweiten U-Rohrprofils 7 ist ein Leuchtenträger 13 befestigt, an dem außenseitig jeweils eine Leuchtenbox 14, 15 mit Rück-, Brems- und Blinkerleuchten befestigt ist. Zwischen beiden Leuchtenboxen 14, 15 ist der Leuchtenträger 13 etwas eingezogen und bildet dort die Möglichkeit für die Befestigungs eines Nummernschildes.

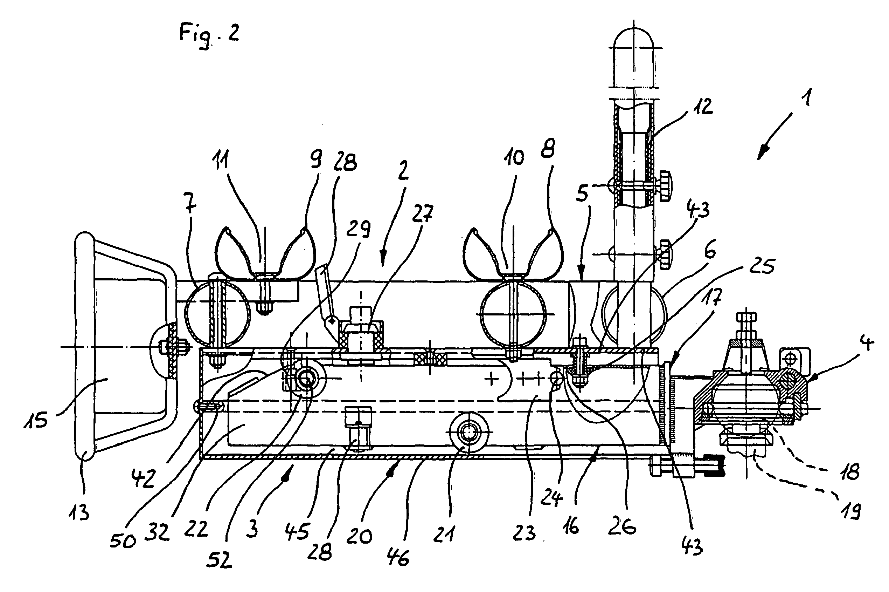

Figur 2 läßt erkennen, wie das Schiebe-Kipp-Element 3, auf dem die Trageinrichtung 2 befestigt ist, im einzelnen ausgebildet ist. Das Schiebe-Kipp-Element 3 weist ein Innenteleskop 16 auf, das Teil eines Tragelements 17 ist, welches starr mit der Kupplung 4 verbunden ist. Auf die Einzelheiten der Kupplung 4 wird nicht näher eingegangen, da sie nicht Gegenstand der vorliegenden Erfindung ist und in ihrer Bauart bekannt ist. Sie umklammert einen gestrichelt dargestellten, genormten Kugelkopf 18, der zu einer üblichen Anhängerkupplung 19 gehört.

Das Innenteleskop 16 ist von einem Außenteleskop 20 umgeben, an dem obenseitig die Trageinrichtung 2 befestigt ist. An dem Außenteleskop 20 ist die zugewandte Seitenwandung weggelassen, so daß zu sehen ist, daß das Innenteleskop 16 eine erste, kupplungsnahe Führungsrolle 21 und eine zweite, kupplungsferne Führungsrolle 22 aufweist. Auf der anderen, hier nicht sichtbaren Seite des Innenteleskops 16 sind gegenüberliegend ebenfalls erste und zweite Führungsrollen in gleicher Anordnung vorgesehen. Die Führungsrollen 21, 22 sind frei drehbar um horizontale Querachsen gelagert.

An der Innenseite der hier weggeschnittenen Seitenwandung des Außenteleskops 20 ist ein Anschlagblock 23 befestigt. In der gezeigten ersten Endstellung umfaßt der Anschlagblock 23 halbkreisförmig einen ersten Endanschlag 24 in Form eines von dem Innenteleskop 16 vorstehenden Bolzen. Das rückseitige Ende des Anschlagblocks 23 ist an den Durchmesser der zweiten Führungsrolle 22 angepaßt. In der zweiten, kupplungsfernen Endstellung des Außenteleskops 20 liegt der Anschlagblock 23 am Umfang der zweiten Führungsrolle 22 an. Der Abstand zwischen Endanschlag 24 und zweiter Führungsrolle 22 bestimmt also den Schiebeweg, den das Außenteleskop 20 relativ zu dem Innenteleskop 16 linear zurücklegen kann. Auf der hier abgewandten Seite weist das Außenteleskop 20 ebenfalls einen Anschlagblock und das Innenteleskop 16 einen vorstehenden Bolzen in symmetrischer Anordnung auf.

Von der Innenseite der Deckenwandung des Außenteleskops 20 steht ein bolzenförmiges Führungselement 25 vor, das in einen Führungsschlitz 26 einfaßt und die den Führungsschlitz 26 begrenzenden Deckenwandungsteile hinterfaßt. Er dient neben den Führungsrollen 21, 22 als zusätzliche seitliche und vertikale Führung des Außenteleskops 20 gegenüber dem Innenteleskop 16.

In die Deckenwandung des Außenteleskops 20 ist eine Verriegelungseinrichtung 27 eingesetzt, die mittels einer Schutzklappe 28 abgedeckt werden kann. Die Verriegelungseinrichtung 27 ragt in Verriegelungsstellung in eine Öffnung des Innenteleskops 16 hinein und blockiert auf diese Weise das Außenteleskop 20 gegenüber dem Innenteleskop 16, d.h. das Außenteleskop 20 kann in der Verriegelungsstellung nicht gegenüber dem Innenteleskop 16 bewegt werden. Die Verriegelungseinrichtung 27 ist mit einem Schloß gesichert. Es kann nur durch Benutzung eines entsprechenden Schlüssels entriegelt werden.

An dem Innenteleskop 16 sind beidseits vertikale Führungswalzen 28 frei drehbar aufgehängt. An ihnen liegen die Seitenwandungen des Außenteleskops 20 an. Zusätzlich ist an der Deckenwandung des Außenteleskops 20 ein weiterer Anschlagblock 29 angebracht, der in der in Figur 2 gezeigten Stellung an der Achse der zweiten Führungsrolle 22 anliegt und auf diese Weise ebenfalls die Seitenführung verbessert.

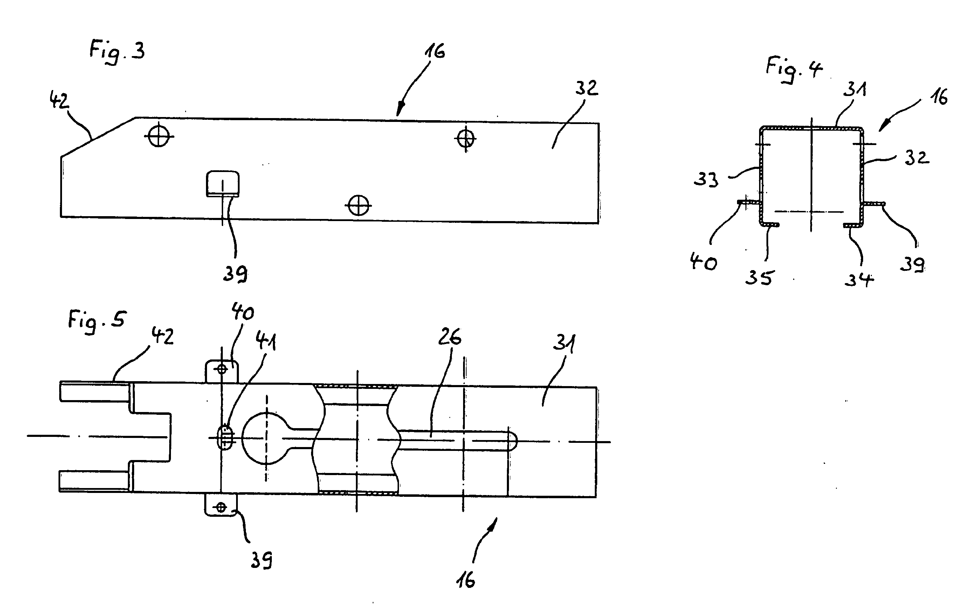

Die Figuren 3 bis 5 lassen die Formgebung des Innenteleskops 16 näher erkennen. Figur 4 zeigt, daß das Innenteleskop 16 rechteckigen Querschnitt hat und nach unten hin offen ist. Es hat eine Deckenwandung 31, zwei Seitenwandungen 32, 33 und zwei untenseitige Stege 34, 35. Figur 3 zeigt die beiden Aufnahmeöffnungen 36, 37 für die Führungsrollen 21, 22 und eine weitere Aufnahmeöffnung 38 für den Endanschlag 24. Außerdem sind in allen Figuren ausgestanzte Haltestege 39, 40 zu erkennen, an denen die Führungswalzen 28 aufgehängt werden.

In der Draufsicht gemäß Figur 5 ist eine Verriegelungsöffnung 41 zu sehen, in die ein Verriegelungsbolzen der Verriegelungseinrichtung 27 einfährt, wenn sie in Verriegelungsstellung gebracht wird. Des weiteren ist die Formgebung des Führungsschlitzes 26 erkennbar. Der Führungsschlitz 26 ist in einem ersten, kupplungsnahen Abschnitt so schmal gehalten, daß das Führungselement 25 die den Führungsschlitz 26 begrenzenden Teile der Deckenwandung 31 hinterfaßt. Der schmale Abschnitt des Führungsschlitzes 26 verbreitert sich im hinteren Endbereich auf einen Durchmesser, der größer ist als der größte Durchmesser des Führungselements 25. Das Innenteleskop 16 geht rückseitig in eine Schräge 42 über.

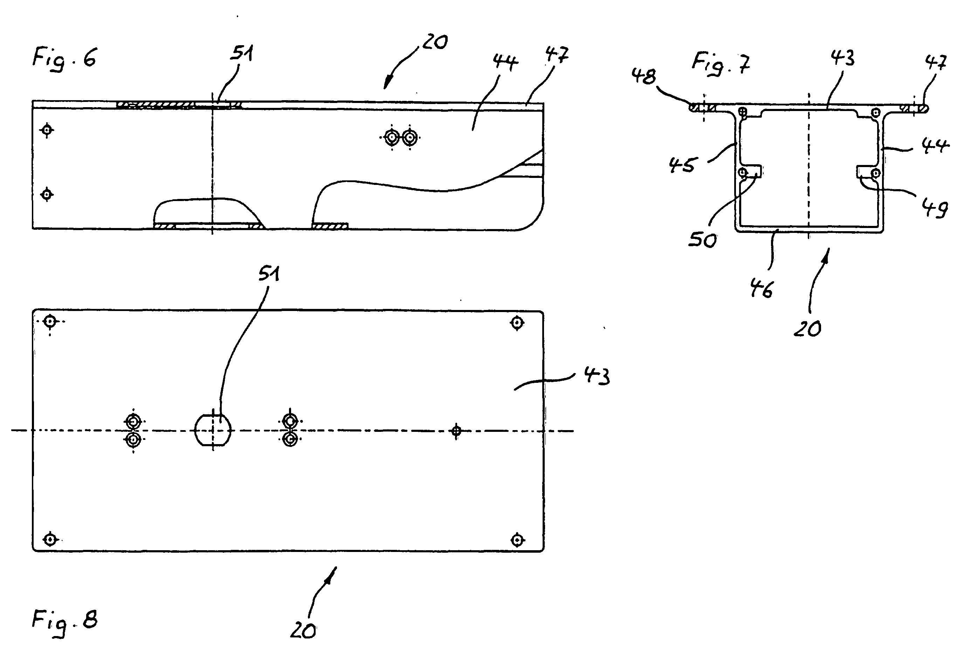

Das in den Figuren 6 bis 8 dargestellte Außenteleskop 20 ist - wie insbesondere Figur 7 erkennen läßt - als stranggepreßtes Hohlprofilrohr rechteckigen Querschnitts ausgebildet. Es hat eine Deckenwandung 43, zwei Seitenwandungen 44, 45 und eine Bodenwandung 46. Die Deckenwandung 43 setzt sich seitlich in Befestigungsstege 47, 48 fort.

Von den Innenseiten der beiden Seitenwandungen 44, 45 ragen Führungsstege 49, 50 vor. Der Abstand zwischen den Unterseiten der Führungsstege 49, 50 und der Bodenwandung 46 entspricht dem Durchmesser der ersten Führungsrolle 21, während der Abstand der Oberseiten der Führungsstege 49, 50 zu der Deckenwandung 43 dem Durchmesser der zweiten Führungsrolle 22 entspricht. Wie aus Figur 6 ersichtlich ist, endet die Bodenwandung 46 weit vor dem vorderseitigen Ende des Außenteleskops 20. Die Deckenwandung 43 hat eine Aufnahmeöffnung 51 für die Verriegelungseinrichtung 27.

Wie aus Figur 2 in Kombination mit den Figuren 6 bis 8 zu ersehen ist, wird das Außenteleskop 20 dadurch auf dem Innenteleskop 16 geführt, daß die erste Führungsrolle 21 in den Raum zwischen Führungssteg 49 und Bodenwandung 46 und die zweite Führungsrolle 22 in den Raum zwischen Führungssteg 49 und Deckenwandung 43 einfaßt. Auf der in Figur 2 abgewandten Seite ist die Anordnung spiegelbildlich. Eine zusätzliche Führung gibt das in den Führungsschlitz 26 einfassende Führungselement 25.

Figur 2 zeigt den Fahrradträger 1 in der Transportstellung. In dieser Stellung werden in die Nuten 10, 11 eingestellte und an dem Befestigungsbügel 12 fixierte Fahrräder transportiert. Die Verriegelungseinrichtung 27 befindet sich dabei in Verriegelungsstellung.

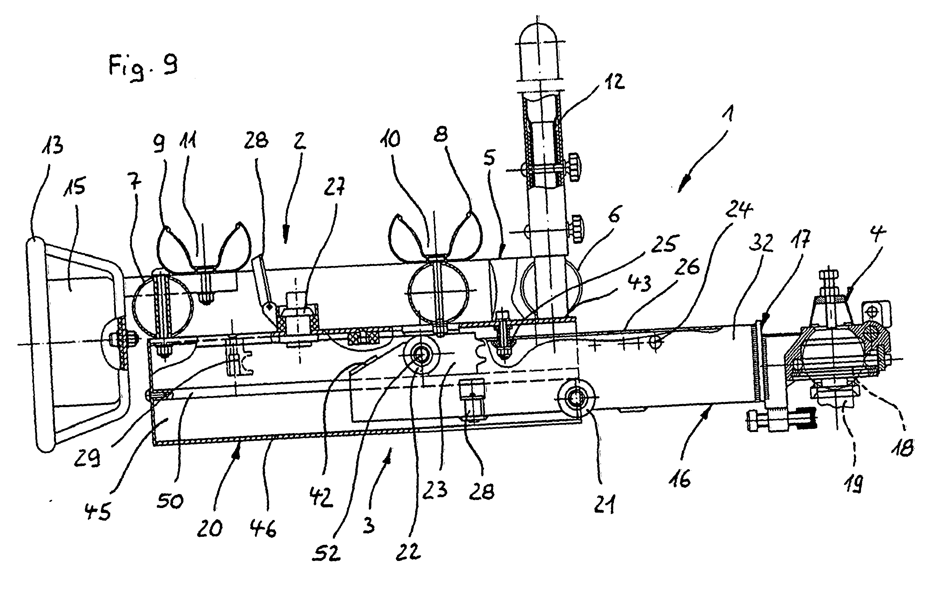

Soll die Heckklappe des Fahrzeugs geöffnet werden, an dessen Anhängerkupplung 19 der Fahrradträger 1 befestigt ist, wird die Verriegelungseinrichtung 27 in Offenstellung gebracht, so daß deren Verriegelungsbolzen aus der Verriegelungsöffnung 41 herausfährt. Das Außenteleskop 20 ist dann frei gegenüber dem Innenteleskop 16 bewegbar und kann zusammen mit der Trageinrichtung 2 nach hinten geschoben werden. Dies geschieht solange, bis die Stellung gemäß Figur 9 erreicht ist, in der der Anschlagblock 23 gegen die zweite Führungsrolle 22 angefahren ist. Zuvor hat die erste Führungsrolle 21 die Bodenwandung 46 verlassen, so daß das Außenteleskop 20 nur noch durch das Führungselement 25 in seiner horizontalen Stellung gehalten worden ist. In der in Figur 9 gezeigten Stellung hat das Führungselement 25 den kreisförmig erweiterten Bereich des Führungsschlitzes 26 gerade erreicht, so daß das Außenteleskop 20 nunmehr kippfähig ist.

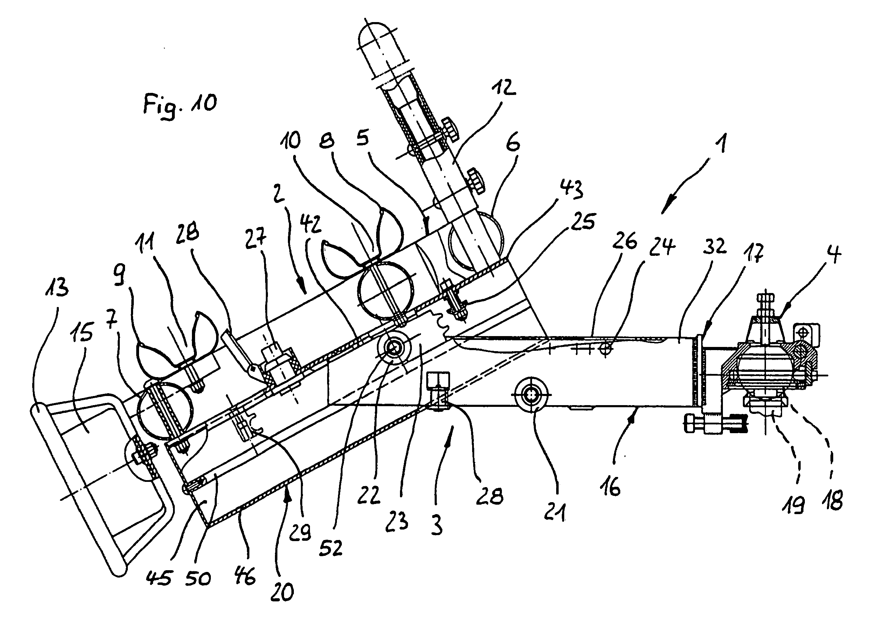

Aus der in Figur 9 gezeigten Stellung kann jetzt das Au-βenteleskop 20 um eine von der Achse der zweiten Führungsrolle 22 gebildeten Querachse 52 in die in Figur 10 dargestellte Abklappstellung verschwenkt werden. Dabei kommt es zur Anlage zwischen Innenseite der Deckenwandung 43 des Außenteleskops 20 und der Schräge 42 des Innenteleskops 16. Der Winkel der Schräge 42 begrenzt den Abklappwinkel. In der gezeigten Stellung kann die Heckklappe des Fahrzeugs geöffnet werden, ohne daß auf der Trageinrichtung 2 befindliche Fahrräder entfernt werden müssen.

Aus der Abklappstellung gemäß Figur 10 kann die Transportstellung gemäß Figur 2 dadurch wieder hergestellt werden, daß das Außenteleskop 20 mit der Trageinrichtung 2 in die in Figur 9 gezeigte Horizontale zurückgeschwenkt und dann in Richtung auf die Kupplung 4 verschoben wird, bis der Anschlagblock 23 an dem Endanschlag 24 anläuft. Damit ist die Transportstellung gemäß Figur 2 wiederhergestellt. Nach Verriegelung mittels der Verriegelungseinrichtung 27 kann dann weitergefahren werden.

## Patentansprüche

1. Lastenträger (1), insbesondere Fahrradträger, für Kraftfahrzeuge mit folgenden Merkmalen:
a) der Lastenträger (1) hat eine Kupplung (4) für die Verbindung mit dem Heck (18) eines Kraftfahrzeuges;
b) der Lastenträger (1) hat ein davon ausgehendes Tragelement (17);
c) das Tragelement (17) trägt eine Trageinrichtung (2) ;
d) die Trageinrichtung (2) weist wenigstens eine Lastenaufnahme (8, 9) für die Anbringung einer Last auf;
e) Tragelement (17) und Trageinrichtung (2) sind über ein Schiebe-Kipp-Element (3) miteinander gekoppelt;
f) das Schiebe-Kipp-Element (3) ist derart ausgebildet, daß die Trageinrichtung (2) einerseits aus einer ersten, kupplungsnahen Endstellung mittels einer einen Schiebeweg bereitstellenden Schiebeführung in eine zweite, kupplungsferne Endstellung verschieblich ist und andererseits um eine horizontale Querachse (52) aus einer Normalstellung in eine Abklappstellung nach unten kippbar ist;
g) es ist eine Verriegelungseinrichtung (27) zur Blockierung der Trageinrichtung (2) in der ersten Endstellung vorhanden,
h) die Schiebeführung ist so ausgebildet, daß die Trageinrichtung (2) nach Entriegeln der Verriegelungseinrichtung (27) sofort frei beweglich und zwischen den beiden Endstellungen zwangsgeführt ist,
**gekennzeichnet durch** folgendes Merkmal:
i) die Schiebeführung ist so ausgebildet, daß die Trageinrichtung (2) in einem ersten, kupplungsnahen Schiebebereich nicht kippbar ist.

2. Lastenträger nach Anspruch 1, **dadurch gekennzeichnet, daß** der Schiebeweg wenigstens 10 cm beträgt.

3. Lastenträger nach Anspruch 1 oder 2, **dadurch gekennzeichnet, daß** die Schiebeführung derart ausgebildet ist, daß die Trageinrichtung (2) erst in der zweiten Endstellung in die Abklappstellung kippbar ist.

4. Lastenträger nach einem der Ansprüche 1 bis 3, **dadurch gekennzeichnet, daß** die Schiebeführung so ausgebildet ist, daß die Trageinrichtung (2) ausschließlich linear verschieblich ist.

5. Lastenträger nach Anspruch 4, **dadurch gekennzeichnet, daß** die Schiebeführung so ausgebildet ist, daß die Trageinrichtung (2) bei bestimmungsgemäßer Montage horizontal beweglich ist.

6. Lastenträger nach einem der Ansprüche 1 bis 5, **dadurch gekennzeichnet, daß** die Schiebeführung als Teleskopführung mit einem Innenteleskop (16) und einem darauf verschieblich gelagerten Außenteleskop (20) ausgebildet ist.

7. Lastenträger nach Anspruch 6, **dadurch gekennzeichnet, daß** das Innenteleskop (16) zum Tragelement (17) gehört und die Trageinrichtung (2) an dem Außenteleskop (20) befestigt ist.

8. Lastenträger nach Anspruch 6 oder 7, **dadurch gekennzeichnet, daß** Innen- und Außenteleskop (16, 20) als im Querschnitt rechteckige Rohre ausgebildet sind.

9. Lastenträger nach einem der Ansprüche 6 bis 8, **dadurch gekennzeichnet, daß** zwischen Außen- und Innenteleskop (20, 16) eine Zusatzführung (25, 26) vorgesehen ist, die ausschließlich in einem ersten, kupplungsnahen Schiebebereich in der Weise wirksam ist, daß sie die Trageinrichtung (2) am Abklappen hindert.

10. Lastenträger nach einem der Ansprüche 1 bis 9, **dadurch gekennzeichnet, daß** die Schiebeführung einen Rollensatz (21, 22) aufweist, über den die Trageinrichtung (2) relativ zu dem Tragelement (17) verschiebbar geführt ist.

11. Lastenträger nach wenigstens den Ansprüchen 1 und 10, **dadurch gekennzeichnet, daß** der Rollensatz (21, 22) an dem Innenteleskop (16) gelagert ist.

12. Lastenträger nach Anspruch 10 oder 11, **dadurch gekennzeichnet, daß** der Rollensatz zumindest eine erste, kupplungsnahe und zumindest eine zweite, kupplungsferne Führungsrolle (21, 22) aufweist.

13. Lastenträger nach Anspruch 12, **dadurch gekennzeichnet, daß** zwei erste und zwei zweite Führungsrolle (21, 22) jeweils auf einer zur Querachse (52) parallelen Achse im Abstand zueinander gelagert sind.

14. Lastenträger nach Anspruch 12 oder 13, **dadurch gekennzeichnet, daß** die zumindest erste und die zumindest zweite Führungsrolle (21, 22) höhenversetzt angeordnet sind.

15. Lastenträger nach einem der Ansprüche 12 bis 14, **dadurch gekennzeichnet, daß** die Führungsrollen (21, 22) von Führungsbahnen (43, 46, 49, 50) beidseitig eingefaßt sind.

16. Lastenträger nach einem der Ansprüche 12 bis 15, **dadurch gekennzeichnet, daß** die zumindest erste Führungsrolle (21) einen solchen Abstand zur Kupplung (4) hat, daß die Trageinrichtung (2) nur in einem ersten, kupplungsnahen Schiebebereich von der zumindest einen ersten Führungsrolle (21) geführt wird, dann jedoch um die zumindest eine zweite Führungsrolle (22) abklappbar ist.

17. Lastenträger nach einem der Ansprüche 1 bis 16, **dadurch gekennzeichnet, daß** der Schiebeweg in den beiden Endstellungen durch Endstellungsanschläge (22, 23, 24) begrenzt ist.

18. Lastenträger nach einem der Ansprüche 1 bis 17, **dadurch gekennzeichnet, daß** die Trageinrichtung (2) in der Abklappstellung an einem Abklappanschlag (42) anliegt, der an dem Tragelement (17) vorgesehen ist.

## Claims

1. Carrying means (1), particularly for carrying a bicycle or bicycles, for vehicles and having the following characteristics:
a) the carrying means (1) has connection means (4) for connection to the rear (18) of a vehicle;
b) the carrying means (1) has a support element (17) extending from it;
c) the support element (17) bears a carrying device (2);
d) the carrying device (2) has at least one load carrier (8, 9) to which the given load can be attached;
e) the support element (17) and the carrying device (2) are connected to each other by means of a slide-tilt element (3);
f) the slide-tilt element (3) is formed such that the carrying device (2) can on the one hand be shifted from a first end position close to the connection into a second end position away from the connection by means of a slide-guide that sets up the sliding path, and secondly such that it can be tilted downwards, around transverse shafting (52), from a normal position into a tilted position;
g) there is a catch device (27) for locking the carrying device (2) into a first end position,
h) the slide-guide is formed such that the carrying device (2), following the release of the catch device (27), can immediately move freely and is forced to move between the two end positions;
**characterized in that**:
i) the slide-guide is formed such that the carrying device (2) cannot be tilted in a first sliding area that is close to the connection point.

2. Carrying means in accordance with claim 1, **characterized in that** the sliding path extends over at least 10 cm.

3. Carrying means in accordance with claims 1 or 2, **characterized in that** the slide-guide is formed such that the carrying device (2) can only be tilted into the tilted position when it is in the second end position.

4. Carrying means in accordance with one of claims 1 to 3, **characterized in that** the slide-guide is formed such that the carrying device (2) can only be tilted in a linear direction.

5. Carrying means in accordance with claim 4, **characterized in that** the slide-guide is formed such that the carrying device (2) can move horizontally when mounted accordingly.

6. Carrying means in accordance with one of claims 1 to 5, **characterized in that** the slide-guide is in the form of a telescopic guide means with an inner pipe (16) and an outer telescopic pipe (20) around it.

7. Carrying means in accordance with claim 6, **characterized in that** the inner telescopic pipe (16) is part of the support element (17) and **in that** the carrying device (2) is attached onto the outer telescopic pipe (20).

8. Carrying means in accordance with claim 6 or 7, **characterized in that** the inner and outer telescopic pipes (16, 20) have a rectangular cross-section.

9. Carrying means in accordance with one of claims 6 to 8, **characterized in that** there is a supplementary guide means (25, 26), between the inner and the outer telescopic pipe (20, 16), that is only effective in preventing tilting of the carrying device (2) when in a first sliding area that is close to the connection point.

10. Carrying means in accordance with one of claims 1 to 9, **characterized in that** the slide-guide has a pair of rollers (21, 22) by means of which the carrying device (2) is guided by sliding relative to the support element (17).

11. Carrying means in accordance with at least one of claims 1 and 10, **characterized in that** the set of rollers (21, 22) is born on the inner telescopic pipe (16).

12. Carrying means in accordance with claim 10 or 11, **characterized in that** the set of rollers has at least a first guide roller (21) close to the connection and at least one second guide roller (22) placed away from the connection point.

13. Carrying means in accordance with claim 12, **characterized in that** two first and two second guide rollers (21, 22) are each supported, separated from each other, on shafting running parallel to the transverse shafting (52).

14. Carrying means in accordance with claim 12 or 13, **characterized in that** the at least first and at least second guide roller (21, 22) are arranged whereby they are shifted in height.

15. Carrying means in accordance with one of claims 12 to 14, **characterized in that** the guide rollers (21, 22) are enclosed on both sides by guideways (43, 46, 49, 50).

16. Carrying means in accordance with one of claims 12 to 15, **characterized in that** the at least first guide roller (21) is separated from the connection point (4) to an extent whereby the carrying device (2) is only guided by the at least one first guide roller (21) in a first sliding area close to the connection point, but can nevertheless be tilted around the at least one second guide roller (22).

17. Carrying means in accordance with one of claims 1 to 16, **characterized in that** the sliding path is bordered, in the two end positions, by stops (22, 23, 24).

18. Carrying means in accordance with one of claims 1 to 17, **characterized in that** the carrying device (2) lies, in the tilted position, on a tilting stop (42) on the support element (17).

## Revendications

1. Porte-charges (1), en particulier porte-bicyclettes pour véhicules automobiles, doté des caractéristiques suivantes :
a) le porte-charges (1) présente un accouplement (4) pour assurer la liaison avec la partie arrière (18) d'un véhicule automobile ;
b) ledit porte-charges (1) comporte un élément de support (17) qui en fait saillie ;
c) l'élément de support (17) porte un système de support (2) ;
d) ledit système de support (2) offre au moins un receveur de charges (8, 9), en vue du rattachement d'une charge ;
e) l'élément de support (17) et le système de support (2) sont accouplés l'un à l'autre par l'intermédiaire d'un élément (3) de type coulissant-basculant ;
f) ledit élément (3) de type coulissant-basculant est réalisé de façon telle que le système de support (2) puisse, d'une part, coulisser depuis une première position extrême proche de l'accouplement, au moyen d'un guide coulissant procurant un trajet de coulissement, jusqu'à une seconde position extrême éloignée de l'accouplement ; et puisse, d'autre part, basculer vers le bas autour d'un axe transversal horizontal (52), depuis une position normale jusqu'à une position de rabat ;
g) un système de verrouillage (27) est prévu pour bloquer le système de support (2) dans la première position extrême ;
h) le guide coulissant est conçu de façon telle que, à l'issue du déverrouillage du système de verrouillage (27), le système de support (2) devienne aussitôt mobile librement et soit guidé à force entre les deux positions extrêmes,
**caractérisé par** la particularité suivante :
i) le guide coulissant est réalisé de telle sorte que le système de support (2) ne puisse pas basculer dans une première zone de coulissement proche de l'accouplement.

2. Porte-charges selon la revendication 1, **caractérisé par le fait que** le trajet de coulissement est d'au moins 10 cm.

3. Porte-charges selon la revendication 1 ou 2, **caractérisé par le fait que** le guide coulissant est réalisé de telle sorte que le système de support (2) ne puisse basculer, jusqu'à la position de rabat, que lorsqu'il occupe la seconde position extrême.

4. Porte-charges selon l'une des revendications 1 à 3, **caractérisé par le fait que** le guide coulissant est réalisé de telle sorte que le système de support (2) puisse exclusivement effectuer un coulissement linéaire.

5. Porte-charges selon la revendication 4, **caractérisé par le fait que** le guide coulissant est réalisé de telle sorte que le système de support (2) soit mobile horizontalement lorsque le montage est conforme à sa destination.

6. Porte-charges selon l'une des revendications 1 à 5, **caractérisé par le fait que** le guide coulissant est réalisé sous la forme d'un guide télescopique comprenant un élément télescopique intérieur (16) et un élément télescopique extérieur (20) monté, de manière coulissante, sur l'élément précité.

7. Porte-charges selon la revendication 6, **caractérisé par le fait que** l'élément télescopique intérieur (16) fait partie intégrante de l'élément de support (17), et le système de support (2) est fixé à l'élément télescopique extérieur (20).

8. Porte-charges selon la revendication 6 ou 7, **caractérisé par le fait que** les éléments télescopiques intérieur et extérieur (16, 20) sont conçus comme des tubulures de section transversale rectangulaire.

9. Porte-charges selon l'une des revendications 6 à 8, **caractérisé par** la présence, entre les éléments télescopiques extérieur et intérieur (20, 16), d'un guide supplémentaire (25, 26) agissant exclusivement dans une première zone de coulissement proche de l'accouplement, de façon telle qu'il entrave le rabat du système de support (2).

10. Porte-charges selon l'une des revendications 1 à 9, **caractérisé par le fait que** le guide coulissant présente un jeu de rouleaux (21, 22), par l'intermédiaire duquel le système de support (2) est guidé à coulissement vis-à-vis de l'élément de support (17).

11. Porte-charges selon au moins les revendications 1 et 10, **caractérisé par le fait que** le jeu de rouleaux (21, 22) est monté sur l'élément télescopique intérieur (16).

12. Porte-charges selon la revendication 10 ou 11, **caractérisé par le fait que** le jeu de rouleaux comporte au moins des premier et second rouleaux de guidage (21, 22), respectivement proche de l'accouplement et éloigné dudit accouplement.

13. Porte-charges selon la revendication 12, **caractérisé par le fait que** deux premiers et deux seconds rouleaux de guidage (21, 22) sont respectivement montés, à distance mutuelle, sur un axe parallèle à l'axe transversal (52).

14. Porte-charges selon la revendication 12 ou 13, **caractérisé par le fait que** les premier et second rouleaux de guidage (21, 22), respectivement prévus au minimum, sont agencés avec décalage en hauteur.

15. Porte-charges selon l'une des revendications 12 à 14, **caractérisé par le fait que** les rouleaux de guidage (21, 22) sont emprisonnés, de part et d'autre, dans des pistes de guidage (43, 46, 49, 50).

16. Porte-charges selon l'une des revendications 12 à 15, **caractérisé par le fait que** le premier rouleau de guidage (21) prévu au minimum présente, vis-à-vis de l'accouplement (4), une distance telle que le système de support (2) soit guidé, par ledit premier rouleau de guidage (21) prévu au minimum, uniquement dans une première zone de coulissement proche de l'accouplement ; mais puisse toutefois, ensuite, être rabattu autour du second rouleau de guidage (22) prévu au minimum.

17. Porte-charges selon l'une des revendications 1 à 16, **caractérisé par le fait que** le trajet de coulissement est limité, dans les deux positions extrêmes, par des butées (22, 23, 24) de positions extrêmes.

18. Porte-charges selon l'une des revendications 1 à 17, **caractérisé par le fait que** le système de support (2) est appliqué, dans la position de rabat, contre une butée de rabat (42) prévue sur l'élément de support (17).
